# EUROPÄISCHE PATENTSCHRIFT

(11) **EP 0 690 227 B1**
(45) Veröffentlichungstag und Bekanntmachung des Hinweises auf die Patenterteilung: **17.09.1997**
(21) Anmeldenummer: 95109275.8
(22) Anmeldetag: 14.06.1995
(51) Int. Cl.: F02P 17/00, G01D 7/00

(54) **Vorrichtung mit einem Bildschirm zur Anzeige eines Steuerfeldes für die Steuerung eines den Lauf eines Verbrennungsmotors überwachenden Messgeräts**
Device with a screen for displaying a control panel for controlling a combustion engine analyzer
Dispositif avec un écran pour visualiser un panneau de contrôle pour contrôler un appareil d'analyse pour un moteur à combustion

(30) Priorität: 27.06.1994 DE 9410343 U
(43) Veröffentlichungstag der Anmeldung: 03.01.1996
(73) Patentinhaber: SIEMENS AKTIENGESELLSCHAFT, 80333 München (DE)
(72) Erfinder: Messbacher, Gerd, D-90587 Tuchenbach (DE); Rudolph, Roland, D-90765 Fürth (DE)

(56) Entgegenhaltungen:
- EP-A- 0 477 507
- DE-A- 4 243 543
- Produktbeschreibung SITEST 462

## Beschreibung

Aus der EP 0 477 507 A2 ist ein digitales Motorprüfgerät bekannt. Zur Durchführung der Prüfungen können Anzeigen auf einem Bildschirm über spezielle Funktionstasten oder über eine separate Tastatur aktiviert werden.

Bei der Entwicklung und beim Service von modernen Verbrennungsmotoren, insbesondere im Kraftfahrzeugbereich, sind in heutiger Zeit deren Treibstoffverbrauch und die Emissionen von Schadstoffen besonders zu beachten. Um auf diese Eigenschaften eines Verbrennungsmotors insbesondere konstruktiv und bei dessen Instandhaltung Einfluß nehmen zu können ist es notwendig, den Lauf eines Verbrennungsmotors, d.h. insbesondere den sich in jedem Zylinder ereignenden Verbrennungsvorgang, meßtechnisch genau zu erfassen. Hierzu sind Prüfstandsgeräte im Einsatz, welche auch kurz als sogenannte "Zündungstester" bezeichnet werden können. Mit derartigen Geräten sind eine Vielzahl von für Verbrennungsmotoren spezifische Meßwerte erfaßbar. Bei Ottomotoren sind dies z.B. die Drehzahl, Drehzahlschwankungen, der Schließwinkel, die Zündwinkel der einzelnen Zylinder u.dgl.. Bei Dieselmotoren können zusätzlich erfaßt werden z.B. der Einspritzbeginn, die Einspritzdauer u.dgl.. Ein Gerät dieser Art wurde z.B. von der Firma Siemens unter der Typenbezeichnung SITEST 462 entwickelt.

Bei derartigen Meßgeräten besteht ein besonderes Problem darin, daß die Bedienung selbst für Fachpersonal kompliziert ist. So sind eine grundlegende Einweisung und ein intensives Training für eine fehlerfreie Bedienung der Geräte notwendig. Die Ursache dieser Probleme wird in den für die Bedienung der Geräte vorhandenen Elementen gesehen. So erfolgt die Steuerung der Geräte, d.h. die Aktivierung unterschiedlicher Betriebsarten, in der Regel über herkömmliche Taster. Zur Anzeige von Meß- und Vorgabewerten sind herkömmliche Digitalanzeigevorrichtungen vorgesehen. Die in einer möglichst geringen Anzahl vorhandenen Taster und Digitalwertanzeigen sind verteilt in einer Frontplatte des Gerätes eingelassen.

Aufgrund dieser Gestaltung der Steuer- und Anzeigeelemente auf einer Frontplatte eines Prüfstandsgerätes sind zur Aktivierung von Funktionen häufig komplexe Bedienhandlungen notwendig, in die meist mehrere Taster und Digitalanzeigevorrichtungen u.U. auch mehrfach hintereinander einbezogen werden müssen.

Ferner ist es wegen der beschränkten Fläche auf einer derartigen Gerätefrontplatte nicht möglich, für jede Funktion des Gerätes eigene Taster und Digitalwertanzeigen vorzusehen. Vielmehr sind funktionelle Mehrfachbelegungen von Tastern und die Verwendung von einer Digitalanzeigevorrichtung für unterschiedliche Eingabe- und Meßwerte notwendig. Hierdurch wird eine Bedienung erschwert, da ein Bediener z.B. vor dem Ablesen einer Digitalanzeigevorrichtung Kenntnis von dem aktuellen logischen Bedeutungsinhalt des jeweils angezeigten Wertes haben muß, d.h. ob ein Wert z.B. als Drehzahlistwert oder Drehzahlschwankung aufzufassen ist.

Insbesondere ist die Parametrierung derartiger Geräte in aller Regel unübersichtlich, d.h. die Anpassung des Gerätes an ein die besonderen Eigenschaften eines aktuell auszumessenden Verbrennungsmotors. Die zur Parametrierung, d.h. Justierung und Eichung derartiger Geräte notwendigen Abfolgen von Tastenbetätigungen und Anzeigebetrachtungen sind vielfach kompliziert. Die Ursache hierfür wird darin gesehen, daß aufgrund der mengenmäßigen Beschränkung von Tastern und Digitalanzeigevorrichtungen auf einer Frontplatte eines Prüfstandsgerätes einfache Tasten- und Anzeigekombinationen im laufenden Betrieb häufiger vorkommenden Betriebszuständen des Gerätes vorbehalten bleiben müssen. Für die weniger häufig vorkommenden Betriebszustände des Gerätes verbleiben dann nur noch die komplexeren Tasten- und Anzeigekombinationen, welche somit häufig den für die Parametrierung notwendigen Bedienhandlungen zugewiesen werden. Diese bereiten dann im doppelten Sinne Schwierigkeiten, da sie zum einen nicht sehr häufig vorgenommen werden, und diesen zum anderen komplexere Tasten- und Anzeigekombinationen zugeordnet sind.

Der Erfindung liegt somit die Aufgabe zugrunde, ein Vorrichtung zur Parametrierung eines den Lauf eines Verbrennungsmotors überwachenden Meßgerätes anzugeben, bei der die oben dargestellten Schwierigkeiten bei der Bedienung nicht auftreten.

Die Aufgabe wird gelöst mit der im Anspruch 1 angegebenen Vorrichtung. Vorteilhafte weitere Ausführungsformen derselben sind in den nachfolgenden Unteransprüchen angegeben.

Die Erfindung und vorteilhafte Ausführungsformen derselben werden anhand der nachfolgend kurz dargestellten Figuren näher erläutert. Dabei zeigt
- FIG 1: das erfindungsgemäße Bildschirmsteuerfeld, wobei über einen ersten Teil weitere, alternative Teile des Bildschirmsteuerfeldes zusätzlich aktivierbar sind,
- FIG 2: einen zusätzlich zum ersten Teil des erfindungsgemäßen Bildschirmsteuerfeldes aktivierbaren zweiten Teil, womit die zur Erfassung der Meßwerte für die Überwachung beispielhaft eines Ottomotors dienenden Meßgeber parametrier- und aktivierbar sind, und
- FIG 3: einen zusätzlich zum ersten Teil des erfindungsgemäßen Bildschirmsteuerfeldes aktivierbaren dritten Teil, womit die zur Erfassung der Meßwerte für die Überwachung beispielhaft eines Dieselmotors dienenden Meßgeber parametrier- und aktivierbar sind.

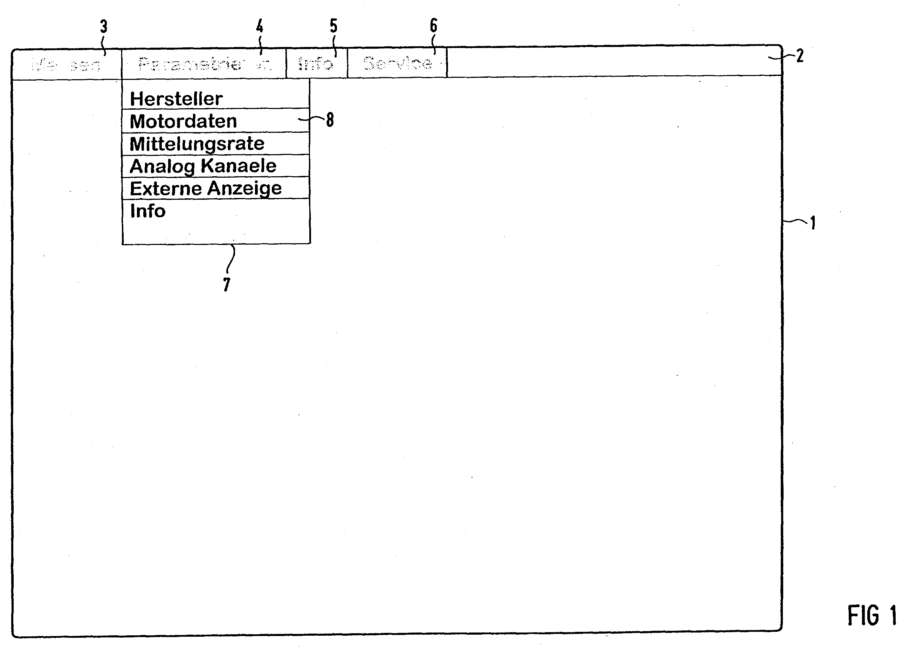

In FIG 1 ist das erfindungsgemäße Bildschirmsteuerfeld 1 beispielhaft dargestellt. Dieses besteht im wesentlichen aus zwei Teilen. Der erste Teil befindet sich bevorzugt im Kopfbereich und wird als Hauptschaltflächenleiste 2 bezeichnet.

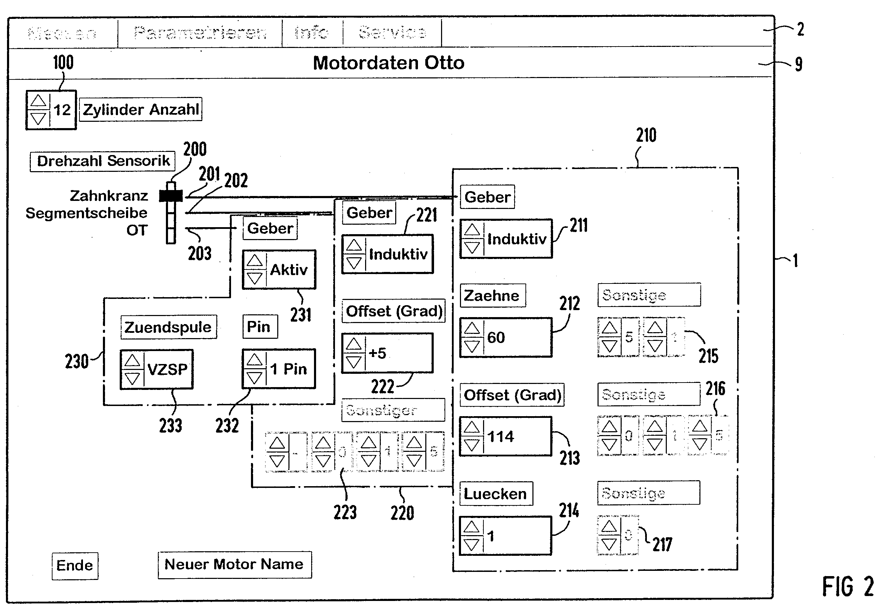

Diese enthält in der Regel mehrere Schaltflächen, womit zusätzlich alternative Teile des Bildschirmsteuerfeldes aktiviert werden können. Diese nehmen dann jeweils den im Beispiel der Fig.2 unterhalb der Hauptschaltflächenleiste liegenden Hauptbereich des Bildschirmsteuerfeldes 1 ein. Die Hauptschaltflächenleiste 2 stellt somit einen mit einem Inhaltsverzeichnis vergleichbaren ersten Teil des erfindungsgemäßen Steuerfeldes 1 dar. Dieser bildet quasi eine Verzweigungsebene, mit deren Hilfe durch Bedienung der dort zusammengestellten Schaltflächen eine Auswahl und Aktivierung von weiteren Teilen des Bildschirmsteuerfeldes möglich ist. Die Hauptschaltflächenleiste 2 kann auch am unteren oder einem der seitlichen Ränder des Bildschirmsteuerfeldes 1 angeordnet sein. Bei Aktivierung von weiteren, alternativen Teilen des Bildschirmsteuerfeldes nehmen diese dann den jeweils daneben liegenden, restlichen Teil des Bildschirmsteuerfeldes ein.

Die Hauptschaltflächenleiste 2 der in FIG 1 dargestellten Ausführung eines erfindungsgemäßen Bildschirmsteuerfeldes für ein den Lauf eines Verbrennungsmotor überwachendes Meßgerät weist beispielhaft die Schaltflächen "Messen", "Parametrieren", "Info" und "Service" auf. Durch Betätigung eines dieser Schaltflächen z.B. über eine Tastatur, einen sogenannten Leuchtstift bzw. ein herkömmlich als "Maus" bezeichnetes Eingabegerät können zusätzlich zur Hauptschaltflächenleiste weitere alternative Teile des Bildschirmsteuerfeldes aktiviert werden. Diese erscheinen dann in dem in FIG 1 darunter liegenden, freien Hauptbereich des Bildschirmsteuerfeldes.

Bei dem in FIG 1 dargestellten Beispiel wird durch Betätigung einer Schaltfläche der Hauptschaltflächenleiste 2 jeweils eine dazugehörige, zusätzliche Unterschaltflächenleiste aktiviert, welche eine Vielzahl von bevorzugt tabellarische angeordneten weiteren Schaltflächen enthält. So wird bei Betätigung der mit "Parametrieren" bezeichneten Schaltfläche 4 eine Unterschaltflächenleiste 7 geöffnet, welche z.B. die weiteren Schaltflächen "Hersteller", "Motordaten", "Mittelungsrate", "Analogkanäle", "Externe Anzeige" und "Info" aufweist. Bei Betätigung einer dieser Schaltflächen wird nach Ausblenden der Unterschaltflächenleiste 7 unterhalb der Hauptschaltflächenleiste 2 dann ein weiterer, alternativer Teil des Bildschirmsteuerfeldes zusätzlich aktiviert.

Für die weitere Beschreibung der Erfindung ist nur die mit "Motordaten" bezeichnete Schaltfläche 8 der Unterschaltflächenleiste 7 von Bedeutung. Mit Hilfe des nach deren Betätigung aktivierten weiteren Teiles des Bildschirmsteuerfeldes ist es möglich, die Meßwerteerfassung des den Lauf eines Verbrennungsmotors überwachenden Meßgerätes zu parametrieren und aktivieren. Das Meßgerät wird somit hierüber zur Ermöglichung einer ordnungsgemäßen Messung auf die typabhängigen, besonderen Eigenschaften des jeweils zu überwachenden Verbrennungsmotors eingestellt und anschließend in Betrieb gesetzt.

Das Bildschirmsteuerfeld weist hierzu gemäß der Erfindung zum einen ein Eingabeelement auf, womit die Anzahl der Zylinder des jeweils zu prüfenden Verbrennungsmotors vorgegeben werden kann. Ferner ist ein mehrstufiger Schiebeschalter zur Aktivierung eines von mehreren, gegebenenfalls alternativ vorhandenen Meßgebern des Meßgerätes vorhanden. Dabei ist einer jeden Stellung des Schiebeschalters ein einzelner Meßgeber zugeordnet. Schließlich weist das Bildschirmsteuerfeld eine mit der Stufenzahl des Schiebeschalter übereinstimmende Anzahl an Bedienfeldern auf. Jedes Bedienfeld ist einer Stellung des Schiebeschalters zugeordnet. Die Bedienfelder weisen Eingabeelemente auf, worüber ein der jeweiligen Stellung des Schiebeschalters zugeordneter Meßgeber parametrierbar ist. Die Eingabeelemente sind bevorzugt in einer für die Bildschirmsteuertechnik üblichen Weise z.B. mit neben dem Anzeigebereich liegenden, dreieckförmigen Tastbereichen zur anwendungsabhängigen Erhöhung bzw. Reduzierung des Anzeigewertes ausgeführt, bzw. können bevorzugt über eine separate Tastatur, einen sogenannten Leuchtstift bzw. Bildschirmgriffel oder ein herkömmlich also "Maus" bezeichnetes Eingabegerät betätigt werden.

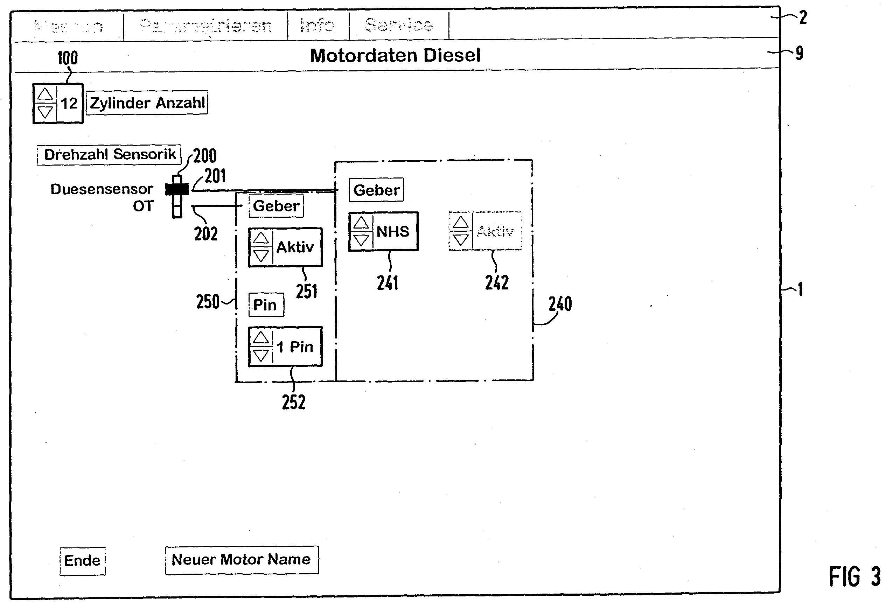

Die Erfindung wird des weiteren anhand den in FIG 2 und 3 dargestellten Beispielen näher erläutert. Dabei betrifft der in FIG 2 dargestellte und in einer Informationszeile 9 mit "Motordaten Otto" bezeichnete weitere Teil des Bildschirmsteuerfeldes die Aktivierung von mehreren für die Erfassung des Istwertes der Drehzahl eines sogenannten Ottomotores vorhandenen Meßgebern. In gleicher Weise betrifft der in FIG 3 dargestellte und in einer Informationszeile 9 mit "Motordaten Diesel" bezeichnete weitere Teil des Bildschirmsteuerfeldes die Aktivierung eines von mehreren im Meßgerät vorhandenen Meßgebern, womit der Istwert der Drehzahl eines Dieselmotors erfaßt werden kann.

Das erfindungsgemäße Bildschirmsteuerfeld weist den besonderen Vorteil auf, daß alle zur Parametrierung von mehreren, alternativen Meßgebern benötigten Eingabeelemente gleichzeitig auf dem Bildschirmsteuerfeld angezeigt werden. Ein Bediener hat somit zum einen über den mehrstufigen Schiebeschalter genaue Kenntnis davon, welche Meßgeber zur Verfügung stehen und alternativ aktiviert werden können. Zum anderen werden alle für einen Meßgeber benötigten Eingabeelemente, übersichtlich zu Bedienfeldern gruppiert, angezeigt.

Mit Hilfe des erfindungsgemäßen Bildschirmsteuerfeldes ist somit die Parametrierung der Meßwerteerfassung eines den Lauf eines Verbrennungsmotors überwachenden Meßgerätes auf einfache, übersichtliche und fehlerfreie Weise möglich. Ein Bediener kann unter Berücksichtigung der für die Parametrierung eines Meßgebers im jeweiligen Bedienfeld vorhandenen Eingabeelemente eine für die jeweils vorliegende Meßaufgabe optimale Auswahl eines der zur Verfügung stehenden Meßgebern des Meßgerätes durch entsprechende Betätigung des mehrstufigen Schiebeschalters vornehmen.

Der in FIG 2 beispielhaft dargestellte und mit "Motordaten Otto" bezeichnete weitere Teil des Bildschirmsteuerfeldes 1 weist zunächst ein Eingabeelement 100 für die aktuelle Anzahl der Zylinder des jeweils zu überwachenden Verbrennungsmotors auf. Dieses ist in der FIG 2 beispielhaft auf einen 12- Zylindermotor eingestellt. Mit Hilfe der im linken Bereich des Eingabeelementes 100 befindlichen dreieckförmigen Tastbereiche kann der Vorgabewert erniedrigt bzw. erhöht werden.

Der erfindungsgemäße mehrstufige Schiebeschalter 200 befindet sich im Beispiel der FIG 2 im oberen linken Bereich des Bildschirmsteuerfeldes 1. Er dient zur Aktivierung eines von beispielhaft drei Meßgebern des Meßgerätes, mit denen der Istwert der Motordrehzahl erfaßt werden kann. Dementsprechend ist im Beispiel der FIG 2 der mehrstufige Schiebeschalter 200 mit "Drehzahler Sensorik" bezeichnet. In der oberen Stellung 201 des Schiebeschalters wird ein "Zahnkranz" Drehzahlgeber, in der mittleren Stellung 202 ein "Segmentscheiben" Drehzahlgeber und in der unteren Stellung 203 ein den oberen Totpunkt "OT" eines oder mehrerer Zylinder des Motors auswertender Drehzahlgebern aktiviert.

Gemäß der Erfindung ist einer jeden Stellung 201,202,203 des Schiebeschalters 200 ein Bedienfeld 210,220,230 zugeordnet. Ein jedes Bedienfeld weist mehrere Eingabeelemente auf, worüber ein der jeweiligen Stellung des Schiebeschalters zugeordneter Meßgeber parametrierbar ist. So ist in dem Beispiel der FIG 2 das Bedienfeld 210 der oberen Stellung 201 des Schiebeschalters 200 und dementsprechend dem "Zahnkranz" Drehzahlgeber zugeordnet. Ferner ist das Bedienfeld 220 der mittleren Stellung 202 des Schiebeschalters und dementsprechend dem "Segmentscheiben" Drehzahlgeber zugeordnet. Schließlich ist das Bedienfeld 230 der unteren Stellung 203 des Schiebeschalters 200 und dementsprechend einen den oberen Totpunkt "OT" eines oder mehrere Zylinder des Motors auswertenden Drehzahlgebers zugeordnet.

Das zur Parametrierung des "Zahnkranz" Drehzahlgebers dienende Bedienfeld 210 weist ein erstes, mit "Geber" bezeichnetes Eingabeelement 211 auf. Hiermit kann dem Meßgerät das dem jeweils eingesetzten Geber zugrundeliegende physikalische Meßprinzip, d.h. dessen Typ, vorgegeben werden. In FIG 2 ist im Bedienelement 211 beispielhaft ein "Induktiv" Geber ausgewählt. Es sind auch Hall- bzw. Winkelimpuls-Gebertypen möglich. Diese sind vorteilhaft im Eingabeelement 210 bereits definiert und können durch Betätigung der links befindlichen, dreieckförmigen Tastflächen ausgewählt werden.

Mit dem weiteren, mit "Zähne" bezeichneten Eingabeelement 211 kann die auf dem Zahnkranz des Gebers befindliche aktuelle Zahnanzahl vorgegeben werden. Auch hier kann wiederum mit Hilfe der im linken Bereich des Eingabeelementes 212 befindlichen, dreieckförmigen Tastfelder der in FIG 2 beispielhaft angegebene Wert 60 anwendungsabhängig erhöht bzw. erniedrigt werden. In entsprechender Weise kann mit dem weiteren, mit dem Begriff "Offset" bezeichneten Eingabeelement 213 die Zündvoreilung des zu überwachenden Verbrennungsmotors in Grad vorgegeben werden. Das Bedienfeld 210 weist ferner ein mit "Lücken" bezeichnetes Eingabeelement 214 auf. Hiermit kann die Anzahl der auf dem eingesetzten Zahnkranz fehlenden Zähne, welche zur Erzeugung eines eine volle Umdrehung kennzeichnenden Nullimpulses dienen, vorgegeben werden. Im Beispiel der FIG 2 entspricht die im Eingabeelement 214 enthaltende 1 somit einer "Lückenbreite" von einem Zahn.

Im Beispiel der FIG 2 sind im Bedienfeld 210 drei weitere, jeweils mit "Sonstige" bezeichnete Eingabeelemente 215,216 und 217 dargestellt. Dabei ist das Eingabeelement 215 dem Element 212, das Eingabeelement 216 dem Element 213 und das Eingabeelement 217 dem Element 214 zugeordnet. Jedes dieser Eingabeelemente hat die Aufgabe, für den Fall, daß die in den Eingabeelementen 212,213,214 enthaltenen Voreinstellungen für die jeweils vorliegende Meßaufgabe nicht verwendbar sind, eine individuelle Einstellung für die Parameter "Zähne", "Offset" und "Lücken" zu ermöglichen.

In dem weiteren Bedienfeld 220 im Beispiel der FIG 2, welches der Schalterstellung 202 des Schiebeschalters und somit dem "Segmentscheibe" Drehzahlgeber zugeordnet ist, sind die mit "Geber", "Offset" und "Sonstige" bezeichneten Eingabeelementen 221,222,223 vorhanden. Da diese Elemente funktionell mit den Eingabeelementen 211,213,216 übereinstimmen, kann auf die oben hierzu gegebenen Erläuterungen verwiesen werden.

Schließlich enthält im Beispiel der FIG 2 das Bildschirmsteuerfeld 1 das Bedienfeld 230, welches der unteren Stellung 203 des Schiebeschalters 200 und somit dem dritten alternativen, den oberen Totpunkt "OT" eines oder mehreren Zylinder des Verbrennungsmotors auswertenden Drehzahlmeßgebers zugeordnet ist, drei mit "Geber", "Pin" und "Zündspule" bezeichnete Eingabeelemente 231,232,233. Dabei kann mit dem Eingabeelement 231 der jeweils eingesetzte Gebertyp spezifiziert werden. Bei OT-Drehzahlgebern betrifft dies insbesondere den sogenannten "Aktiv" bzw. "Passiv" Parameter, d.h. ob der Geber mit oder ohne Eigenenergieversorgung ausgeführt ist. Mit dem weiteren Eingabeelement 232 kann die jeweilige "Pin" Anzahl des eingesetzten OT-Drehzahlmeßgebers parametriert werden, d.h. die Anzahl der von diesem pro Umdrehung abgegebenen Impulse. Mit dem letzten Eingabeelement 233 wird schließlich die beim jeweils zu überwachenden Verbrennungsmotor eingesetzte Zündspule parametriert. Im Eingabeelement 233 stehen dabei bevorzugt die Voreinstellungen "VZSP" für Verteilerzündspule bzw. "DZSP" für Doppelzündspule zur Auswahl.

Gemäß einer im Beispiel der FIG 2 bereits dargestellten Ausführungsform ist der mehrstufige Schiebeschalter 200 vorteilhaft so angeordnet, daß sich eine annähernd vertikale Schieberichtung ergibt. Bevorzugt sind in diesem Fall die den Stellungen des Schiebeschalters zugeordneten Bedienfelder annähernd horizontal daneben liegend angeordnet. Es ist weiterhin vorteilhaft, wenn die Lage der Bedienfelder in vertikaler Richtung derart treppenförmig abgestuft ist, daß das der unteren Stellung des Schiebeschalters zugeordnete Bedienfeld die vertikal tiefste Position einnimmt und dem Schiebeschalter am nächsten liegend positioniert ist, und das der obersten Stellung des Schiebeschalters zugeordnete Bedienfeld die vertikal höchste Position einnimmt und vom Schiebeschalter am weitesten weg liegt. In weiterer Ergänzung kann die treppenförmige Abstufung der Lage der Bedienfelder in vertikaler Richtung so gestaltet sein, daß die Bedienfelder bezüglich der Oberkanten vertikal annähernd auf gleicher Höhe mit den jeweils dazugehörigen Stellungen des mehrstufigen Schiebeschalters positioniert sind.

Bei dem in FIG 2 dargestellten Ausführungsbeispiel sind diese zusätzlichen, vorteilhaften Ergänzungen des erfindungsgemäßen Bildschirmsteuerfeldes bereits realisiert. So nimmt das Bedienfeld 230, welches der untersten Stellung 203 des Schiebeschalters 200 zugeordnet ist, vertikal die tiefste Position ein und ist dem Schiebeschalter am nächsten liegend positioniert. Zudem liegt die Oberkante dieses Bedienfeldes 230 horizontal annähernd auf gleiche Höhe mit der Schalterstellung 203. Dies ist durch eine von der Stellung 203 bis zu der an der Oberkante des Bedienfeldes 230 befindlichen Markierung "Geber" reichende horizontale Verbindungslinie symbolisiert.

Annähernd horizontal rechts neben dem Bedienfeld 230 ist das Bedienfeld 220 angeordnet. Dieses nimmt in der Treppenanordnung der drei Bedienfelder 230,220,210 im Beispiel der FIG 2 in vertikaler Richtung eine mittlere Position ein. Auch hier liegt die Oberkante des Bedienfeldes 220 horizontal annähernd auf gleicher Hohe mit der dazugehörigen Stellung 202 des Schiebeschalters 200, was wiederum durch eine entsprechende horizontale Verbindungslinie zwischen Schiebeschalter und der Bezeichnung "Geber" an der Oberkante des Bedienfeldes 220 symbolisiert ist.

Schließlich ist wiederum annähernd horizontal rechts neben dem Bedienfeld 220 das Bedienfeld 210 angeordnet. Es ist einerseits vom Schiebeschalter 200 am weitesten weg liegend positioniert, und nimmt andererseits in der Treppe der drei Bedienfelder 210,220,230 in vertikaler Richtung die höchste Position ein. Auch in diesem Fall liegt die Oberkante des Bedienfeldes 210 horizontal annähernd auf gleicher Höhe mit der dazugehörigen Stellung 201 des mehrstufigen Schiebeschalters 200, was wiederum durch eine horizontale Verbindungslinie zwischen Schiebeschalter und der Bezeichnung "Geber" an der Oberkante des Bedienfeldes 210 symbolisiert ist.

Vorteilhaft sind in jedem Bedienfeld die Eingabeelemente annähernd vertikal übereinanderliegend angeordnet. Auch dies ist im Beispiel der FIG 2 bereits weitgehend realisiert. So sind im Bedienfeld 210 die wesentlichen Eingabeelemente "Geber", "Zähne", "Offset" und "Lücken" in vertikaler Richtung positioniert, d.h. in einer Tabellenstruktur. In gleicher Weise sind auch die Eingabeelemente der Bedienfelder 220,230 annähernd vertikal übereinanderliegend positioniert.

Das erfindungsgemäße Bildschirmsteuerfeld hat den Vorteil, daß das Potential aller verfügbaren Meßgeber und deren Eingabeelemente, übersichtlich zu Bedienfeldern gruppiert und einem zentralen mehrstufigen Schiebeschalter zugeordnet, einem Bediener vollständig dargeboten wird. Dieser ist somit in der Lage, eine auf den jeweils zu überwachenden Verbrennungsmotor optimal zugeschnittene Parametrierung der Meßwerteerfassung durch Auswahl der im jeweiligen Einzelfall am besten geeigneten Meßgeber und der optimalen Vorgabe dazugehöriger Parameter vorzunehmen.

In FIG 3 ist schließlich ein weiteres Beispiel eines gemäß der Erfindung gestalteten Bildschirmsteuerfeldes dargestellt. Dieses entspricht im Prinzip dem Beispiel von FIG 2. Unterhalb der Hauptschaltflächenleiste 2 ist ein weiterer, in einer Informationszeile 9 mit "Motordaten Diesel" überschriebener Teil des Bildschirmsteuerfeldes dargestellt. So ist auch hier das Eingabeelement 100 für die Anzahl der Zylinder des jeweils zu überwachenden Verbrennungsmotors bevorzugt in der linken oberen Ecke des Bildschirmsteuerfeldes 1 angeordnet. Darunter befindet sich der mehrstufige und mit "Drehzahl Sensorik" bezeichnete Schiebeschalter 200. Dieser ist für den dargestellten Fall eines Dieselmotors zweistufig ausgeführt. Die obere Schalterstellung 201 dient dabei zur Aktivierung eines "Düsensensor" Drehzahlmeßgebers. In der unteren Schalterstellung 202 wird wiederum ein den oberen Totpunkt "OT" eines oder mehrerer Zylinder des Verbrennungsmotors auswertender Drehzahlsensor aktiviert.

Auch in dem in FIG 3 dargestellten Beispiel sind die den Stellungen 201,202 des Schiebeschalters zugeordneten Bedienfelder 240,250 annähernd horizontal nebeneinander liegend und in vertikaler Richtung treppenförmig abgestuft angeordnet. Dabei nimmt das der unteren Schalterstellung 202 zugeordnete Bedienfeld 250 vertikal die tiefste Position ein und ist dem Schiebeschalter am nächsten liegend positioniert. Demgegenüber nimmt das Bedienfeld 240 vertikal die höchste Position ein und ist dem Schiebeschalter am weitesten weg liegend positioniert. Wiederum sind die Oberkante der Bedienfelder 240,250 horizontal annähernd auf gleicher Höhe mit den jeweils dazugehörigen Stellungen 201,202 des mehrstufigen Schiebeschalters 200 positioniert.

In dem Beispiel der FIG 3 weist das Bedienfeld 240 im ein mit "Geber" bezeichnetes Eingabeelement 241 auf. Hiermit kann der für die jeweilige Meßaufgabe eingesetzte Typ des sogenannten "Düsensensor" Drehzahlmeßgebers parametriert werden. Dieser Drehzahlgeber greift die zur Bestimmung der Motordrehzahl dienenden Signale an der Einspritzpumpe des Dieselmotors ab. Bevorzugt können hierzu als Voreinstellungen im Eingabeelement 241 zusätzlich die Kennungen "NHS" für Nadelhubsensor bzw. "NBF" für Nadelbewegungsfühler enthalten sein. Über ein daneben befindliches, weiteres Eingabeelement 242 ist es bei Bedarf möglich, weitere Eigenschaften des jeweils eingesetzten Drehzahlmeßgebers zu parametrieren. Mit Hilfe der dort bevorzugt vorgesehenen Parameter "Aktiv", "Passiv" kann dem Meßgerät vorgegeben werden, ob der jeweils eingesetzte "Düsensensor" Drehzahlgeber mit bzw. ohne Eigenenergieverausgeführt ist.

Das horizontal daneben liegend angeordnete weitere Bedienfeld 250, welches der unteren Stellung 202 des Schiebeschalters 200 zugeordnet ist, weist die mit "Geber" und "Pin" bezeichneten Bedienelemente 251, 252 auf. Diese entsprechen den bereits am Beispiel der FIG 2 für einen "OT" Drehzahlmeßgeber beschriebenen Eingabeelemente 231,232.

## Patentansprüche

1. Vorrichtung zur Steuerung eines den Lauf eines Verbrennungsmotors überwachenden Meßgeräts, mit einem Bildschirm zur Anzeige eines Bildschirmsteuerfeldes (1), auf dem angezeigt werden
a) ein Eingabeelement (100) für die Anzahl der Zylinder des jeweiligen Verbrennungsmotors,
b) ein mehrstufiger Schiebeschalter (200) zur Aktivierung von Meßgebern des Meßgerätes, insbesondere von Meßgebern für die Erfassung des Istwertes der Motordrehzahl, wobei einer jeder Stellung (201,202,203) des Schiebeschalters (200) ein Meßgeber zugeordnet ist, und
c) Bedienfeldern (210,220,230), welche jeweils einer Stellung (201,202,203) des Schiebeschalters (200) zugeordnet sind und Eingabeelemente (211,212,213,214;221,220;231, 232,233) aufweisen, worüber ein der jeweiligen Stellung (201,202,203) des Schiebeschalters (200) zugeordneter Meßgeber parametrierbar ist.

2. Vorrichtung nach Anspruch 1, wobei der mehrstufige Schiebeschalter (200) so angeordnet ist, daß sich eine annähernd vertikale Schieberichtung ergibt.

3. Vorrichtung nach Anspruch 1 oder 2, wobei die den Stellungen (201,202,203) des Schiebeschalters (200) zugeordneten Bedienfelder (210,220,230) annähernd horizontal daneben liegend angeordnet sind.

4. Vorrichtung nach Anspruch 3, wobei die Lage der Bedienfelder (210,220,230) in vertikaler Richtung derart treppenförmig abgestuft ist, daß das der untersten Stellung (203) des Schiebeschalters (200) zugeordnete Bedienfeld (230) die vertikal tiefste Position einnimmt und dem Schiebeschalter (200) am nächsten liegend positioniert ist.

5. Vorrichtung nach Anspruch 4, wobei die Lage der Bedienfelder (210,220,230) in vertikaler Richtung derart treppenförmig abgestuft ist, daß die Oberkanten der Bedienfelder (210,220,230) horizontal annähernd auf gleicher Höhe mit den jeweils dazugehörigen Stellungen (201,202,203) des mehrstufigen Schiebeschalters (200) liegen.

6. Vorrichtung nach einem der vorangegangenen Ansprüche, wobei in jedem Bedienfeld (210) die Eingabeelemente (211,212,213,214) annähernd vertikal übereinander liegend angeordnet sind.

## Claims

1. Device for controlling a measuring device which monitors the running of an internal combustion engine, having a screen to display a screen control panel (1), on which there is displayed
a) an input element (100) for the number of cylinders of the respective internal combustion engine,
b) a multistage slide switch (200) to activate sensors of the measuring device, in particular sensors for recording the actual value of the engine speed, whereby a sensor is allocated to each position (201, 202, 203) of the slide switch (200), and
c) control panels (210, 220, 230) which are each allocated to a position (201, 202, 203) of the slide switch (200) and have input elements (211, 212, 213, 214; 221, 220; 231, 232, 233) by means of which a sensor allocated to the respective position (201, 202, 203) of the slide switch (200) can be parameterized.

2. Device according to claim 1, whereby the multistage slide switch (200) is arranged in such a way that an approximately vertical sliding direction is produced.

3. Device according to claim 1 or 2, whereby the control panels (210, 220, 230) allocated to the positions (201, 202, 203) of the slide switch (200) are arranged such that they lie approximately horizontally adjacent thereto.

4. Device according to claim 3, whereby the position of the control panels (210, 220, 230) is graded in a stepped manner in the vertical direction in such a way that the control panel (230) allocated to the lowest position (203) of the slide switch (200) occupies the lowest position vertically and is positioned such that it lies closest to the slide switch (200).

5. Device according to claim 4, whereby the position of the control panels (210, 220, 230) is graded in a stepped manner in the vertical direction in such a way that the upper edges of the control panels (210, 220, 230) lie horizontally approximately at the same level as the respectively associated positions (201, 202, 203) of the multistage slide switch (200).

6. Device according to one of the preceding claims, whereby in each control panel (210) the input elements (211, 212, 213, 214) are arranged such that they lie approximately vertically one on top of the other.

## Revendications

1. Dispositif de commande d'un appareil de mesure contrôlant la marche d'un moteur à combustion, comportant un écran d'affichage d'un champ (1) de commande d'écran, sur lequel sont affichés
a) un élément (100) d'introduction pour le nombre des cylindres du moteur à combustion considéré,
b) un curseur (200) à plusieurs étages pour l'activation de capteurs de mesure de l'appareil de mesure, notamment de capteurs de mesure pour la détection de la valeur réelle de la vitesse de rotation du moteur, un capteur de mesure étant associé à chaque position (201,202,203) du curseur (200) et
c) les champs (210,220,230) de commande, qui sont associés chacun à une position (201,202,203) du curseur (200) et qui comportent des éléments d'introduction (211,212,213,214;221,220;231,232,233) par l'intermédiaire desquels un capteur de mesure associé à la position respective (201,202,203) du curseur (200) peut être paramétré.

2. Dispositif suivant la revendication 1, dans lequel le curseur (200) à plusieurs étages est disposé de sorte à obtenir une direction du curseur approximativement verticale.

3. Dispositif suivant la revendication 1 ou 2, dans lequel les champs de commande (210,220,230) associés aux positions (201,202,203) du curseur (200) sont disposés approximativement horizontalement à côté et allongés.

4. Dispositif suivant la revendication 3, dans lequel la position des champs (210,220,230) de commande est étagée en escalier dans la direction verticale, de telle sorte que le champ (230) de commande associé à la position la plus basse (203) du curseur (200) occupe la position la plus profonde verticalement et soit positionné en étant allongé au plus près du curseur (200).

5. Dispositif suivant la revendication 4, dans lequel la position des champs (210,220,230) de commande est étagée en escalier dans la direction verticale, de telle sorte que les bords supérieurs des champs (210,220,230) de commande soient horizontalement approximativement à la même hauteur que les positions (201,202,203) associées du curseur à plusieurs étages (200).

6. Dispositif suivant l'une des revendications précédentes, dans lequel les éléments (211,212,213,214) d'introduction sont disposés approximativement verticalement les uns au dessus des autres allongés dans chaque champ (210) de commande.
